# EUROPÄISCHE PATENTANMELDUNG

(11) **EP 2 573 440 A2**
(43) Veröffentlichungstag der Anmeldung: **27.03.2013**
(21) Anmeldenummer: 12185439.2
(22) Anmeldetag: 21.09.2012
(51) Int. Cl.: F16L 33/22

(54) **Verbindungsanordnung**

(30) Priorität: 23.09.2011 DE 202011106039 U
(71) Anmelder: Lincoln GmbH, 69190 Walldorf (DE)
(72) Erfinder: Schönfeld, Andreas, 68789 St. Leon-Rot (DE); Beisel, Daniel, 76709 Kronau (DE)
(74) Vertreter: KEIL & SCHAAFHAUSEN Patentanwälte

(57) **Zusammenfassung**

Die Erfindung betrifft eine Verbindungsanordnung, zum Verbinden eines Hochdruckschlauches (6) mit einem Anschluss (7). Sie weist einen hohlen Schlauchstutzen (2) auf, der zumindest bereichsweise in den Hochdruckschlauch (6) einführbar ist. Auf dem Schlauchstutzen (2) ist eine Schraubhülse (3) anordbar, die den Hochdruckschlauch (6) bereichsweise umgreift. Der Schlauchstutzen (2) steht mit dem Anschluss (7) in Strömungsverbindung und ist durch eine Überwurfmutter (4) mit dem Anschluss (7) verbindbar. Die Überwurfmutter (4) umgreift die Schraubhülse (3) zumindest bereichsweise.

## Beschreibung

Die Erfindung betrifft eine Verbindungsanordnung, zum Verbinden eines Schlauches, insbesondere eines Hochdruckschlauches für Fluide, mit einem Anschluss. Die Verbindungsanordnung weist einen hohlen Schlauchstutzen auf, der zumindest bereichsweise in den Schlauch einführbar ist. Auf dem Schlauchstutzen ist eine Schraubhülse anordenbar, die den Schlauch bereichsweise umgreift. Der Schlauchstutzen steht mit dem Anschluss in Strömungsverbindung und ist durch eine Überwurfmutter mit dem Anschluss verbindbar.

Derartige Verbindungsanordnungen werden genutzt, um flexible Hochdruckschläuche beispielsweise mit dem Anschluss einer Hochdruckpumpe zu verbinden. Der Schlauch transportiert dabei ein Medium zu einem Endgerät, wobei das Medium unter einem hohen Druck steht. Beispielsweise kann ein Hydrauliköl zu einem hydraulischen Hammer befördert werden.

Es hat sich herausgestellt, dass bekannte Verbindungsanordnungen bei Hochdruckschläuchen bruchanfällig sind. Dies ist bedingt durch die extremen Anforderungen im Hochdruckbereich. Einerseits steht das zu transportierende Medium unter einem extrem hohen Druck, andererseits ist die Verbindungsanordnung im Betrieb starken Vibrationen ausgesetzt, wie sie beispielsweise bei Hydraulikhämmern vorkommen. Eine weitere Problematik besteht darin, dass Hochdruckschläuche häufigen Lageänderungen durch den Nutzer ausgesetzt sind, da sie zumeist als Zuführungsleitung zu beweglichen Endgeräten genutzt werden.

Zusammenfassend führt dies daher zu einer hohen mechanischen Beanspruchung der einzelnen Komponenten. Als Schwachstelle haben sich insbesondere die nicht flexiblen Bestandteile herausgestellt. Also im Wesentlichen der Bereich zwischen der fest installierten Anschlussseite und der flexiblen Schlauchseite der Verbindung.

Eine weitere technische Herausforderung ist durch die Forderung bedingt, dass die Verbindung zwischen dem Schlauch und dem Anschluss lösbar sein soll. Zudem ist zu beachten, dass sowohl der Innendurchmesser als auch der Außendurchmesser des hohlen Schlauchstutzens wichtige Eigenschaften der Verbindungsanordnung beeinflussen. Durch den Innendurchmesser werden die Fließeigenschaften beeinflusst, so dass eine Verstärkung der Verbindungsanordnung, die zu einem reduzierten Innendurchmesser führen würde, den Fließwiderstand erhöhen würde, was unerwünscht ist. Andererseits führt ein vergrößerter Außendurchmesser zu einer erhöhten Masse, die auch die Vibrationskräfte in der Verbindung steigert, was ebenfalls vermieden werden soll.

Aufgabe der vorliegenden Erfindung ist es daher, eine bruchsichere aber dennoch lösbare Verbindungsanordnung bereitzustellen, ohne dabei die Fließcharakteristiken des zu transportierenden Mediums negativ zu beeinflussen oder die Vibrationskräfte in der Verbindung zu erhöhen.

Diese Aufgabe wird durch eine Verbindungsanordnung nach Anspruch 1 gelöst. Der Erfindung liegt dabei der Gedanke zu Grunde, eine speziell geformte Überwurfmutter vorzusehen, die zumindest bereichsweise auch die Schraubhülse umgreift. Dadurch werden die mechanischen Kräfte, die über den Schlauch in die Verbindungsanordnung eingebracht werden, nicht ausschließlich durch den Schlauchstutzen, sondern zusätzlich auch durch die Überwurfmutter aufgenommen und übertragen. Diese weitere kraftschlüssige Verbindung reduziert die Bruchanfälligkeit des Schlauchstutzens signifikant, ohne dabei seinen inneren oder äußeren Durchmesser zu verändern. Damit wird sichergestellt, dass sich die Fließcharakteristika des transportierten Mediums nicht verändern. Dies erlaubt es, die erfindungsgemäße Verbindungsanordnung zu implementieren, ohne dabei das Pumpensystem modifizieren zu müssen oder die Fließeigenschafften des Mediums zu beeinflussen.

In einer besonders bevorzugten Ausführungsform weist die Überwurfmutter einen ersten Hülsenabschnitt mit einem Innengewinde auf, über den sie mit dem Anschluss verbindbar ist. Am Ende dieses ersten Hülsenabschnittes ist ein nach innen gerichteter Kragen angeordnet, der sich auf dem Schlauchstutzen abstützt. Der Kragen geht in einen weiteren Hülsenabschnitt über, der an der Schraubhülse angreift. Mit anderen Worten ist die Überwurfmutter gegenüber einer herkömmlichen Überwurfmutter durch den weiteren Hülsenabschnitt in einer von dem ersten Hülsenabschnitt mit dem Innengewinde wegweisenden Richtung verlängert. Diese spezielle Konstruktion der Überwurfmutter führt dazu, dass neben dem Schlauchstutzen eine zusätzliche kraftschlüssige Verbindung zwischen Anschluss und Hydraulikschlauch entsteht. Dadurch werden Lastspitzen auch durch die Überwurfmutter aufgenommen und übertragen. Solche Lastspitzen treten beispielsweise beim Bewegen des Schlauches im Schlauchstutzen auf, aber auch durch die Vibrationen des Endgerätes.

Die Überwurfmutter kann entweder so ausgestaltet sein, dass der erste Hülsenabschnitt und der weitere Hülsenabschnitt etwa miteinander fluchten bzw. mit näherungsweise gleichen Durchmessern ineinander übergehen. In diesem Fall ist der Kragen als ein nach innen vorspringender Flansch ausgebildet. Der weitere Hülsenabschnitt kann jedoch auch einen von dem Durchmesser des ersten Hülsenabschnitts abweichenden Durchmesser aufweisen, um beispielsweise an die Außenkontur der Schraubhülse angepasst zu werden.

In einer weiteren Ausführungsform ist der Kragen so geformt, dass er sich in Richtung des Zentrums der Überwurfmutter konisch verjüngt. Dadurch wird Material eingespart, was die Vibrationskräfte in der Verbindungsanordnung verringert. Insbesondere eignet sich eine solche Ausgestaltung jedoch auch, um einen Schneidring oder dgl. Bauteil zur Anbindung an den Anschluss dichtend gegen diesen zu verspannen.

Ferner ist erfindungsgemäß ein Schneidring vorgesehen, der auf dem Schlauchstutzen befestigbar ist und an dem sich die Überwurfmutter abstützen kann, insbesondere mittels des konisch geformten Kragens. Der Schneidring kann aus einem im Vergleich zu den übrigen Komponenten weichen metallischen Material, wie beispielsweise Kupfer, bestehen. Alternativ ist es allerdings auch denkbar, den Schneidring als eine Gummidichtung zu realisieren. Die wichtigste Funktion des Schneidringes ist es, die Verbindung zwischen Schlauchstutzen und Anschluss abzudichten. Hierfür ist es besonders vorteilhaft, wenn der Schneidring aus einem weichen Metall geformt wird und auf dem Schlauchstutzen aufgeschraubt wird. Beim Verschrauben der Überwurfmutter mit dem Anschluss wird so erreicht, dass das weiche Material des Schneidringes den Übergang zwischen Schlauchstutzen und Anschluss effektiv abdichtet.

In einer weiteren Ausführungsform ist es vorgesehen, dass der weitere Hülsenabschnitt der Überwurfmutter, also der dem Innengewinde der Überwurfmutter gegenüberliegende Hülsenabschnitt, eine Ringnut aufweist. Diese Ringnut kann einen Dichtungsring aufnehmen, der den Verbindungsraum zwischen Anschluss und Schlauchstutzen vor Verunreinigung schützt. Dies erhöht die Lebensdauer der gesamten Schlaucharmatur. Alternativ oder zusätzlich hierzu kann auch die Schraubhülse eine Ringnut mit Dichtungsring aufweisen.

In einer weiteren Ausführungsform ist es vorgesehen, dass im Übergangsbereich zwischen der Schraubhülse und dem Schlauch beide von einer Knickschutzfeder umgeben sind. Die Knickschutzfeder ist dabei vorzugsweise als Spiralfeder so geformt, dass die einzelnen Federwindungen auf der Schraubhülse auf Block sitzen, d.h. sich berühren, oder zumindest nahezu berühren. Der Abstand der einzelnen Federwindungen kann beim Übergang auf den Schlauch größer werden. Durch die Knickschutzfeder wird erreicht, dass mechanische Belastungen, die an dem Schlauch angreifen, wie sie beispielsweise durch ein Verlagern oder Bewegen des Schlauches entstehen, abgefedert werden. Somit können mechanische Kräfte besser vom Schlauch auf die Schraubhülse übertragen werden und der Hochruckschlauche ist besser gegen ein Abknicken gesichert. Die Knickschutzfeder kann sich auch bis über den weiteren Hülsenabschnitt der Überwurfmutter erstrecken.

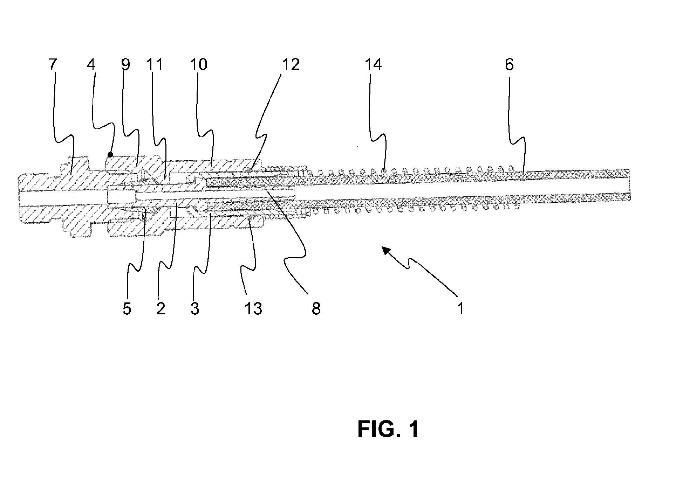

Im Folgenden wird eine Ausführungsform der Erfindung beispielhaft und unter Bezugnahme auf die beigefügte Zeichnung näher erläutert.

Die einzige Figur zeigt eine schematische Schnittansicht einer erfindungsgemäßen Verbindungsanordnung mit Schlauch und Anschluss. Die wesentlichen Bestandteile der Verbindungsanordnung 1 sind ein Schlauchstutzen 2, eine Schraubhülse 3 sowie eine Überwurfmutter 4 und ggf. ein Schneidring 5.

In der Figur ist die Verbindungsanordnung 1 zusammen mit einem Hochdruckschlauch 6 und einem Anschluss 7 gezeigt, welcher mit einem weiteren Bauteil, beispielsweise einer Pumpe oder einer Einlassöffnung eines Gerätes mittels eines Schraubgewindes dichtend verbindbar ist.

Der Schlauchstutzen 2 ist ein im Wesentlichen hülsenförmiges Bauteil mit einem durchgehenden Kanal 8 für das in dem Schlauch 6 geförderte Medium. Ein in der Figur rechter Abschnitt des Schlauchstutzens 2 weist einen reduzierten Außendurchmesser auf, der auf den Innendurchmesser des Schlauches 6 derart abgestimmt ist, dass der Abschnitt des Schlauchstutzens 2 in den Schlauch 6 eingeführt werden kann. An diesen Abschnitt mit reduziertem Außendurchmesser schließt sich ein Gewindeabschnitt an, der wiederum in einen Verbindungsabschnitt übergeht, welcher in den Anschluss 7 eingebracht werden kann.

Auf den Gewindeabschnitt des Schlauchstutzens 2 ist die Schraubhülse 3 aufgeschraubt, welche sich so über den Schlauch 6 und den darin aufgenommenen Abschnitt des Schlauchstutzens 2 erstreckt, dass sie den Schlauch 6 von außen umgreift.

Der in der Figur links angeordnete Verbindungsabschnitt des Schlauchstutzens 2 ist ebenfalls mit einem Außengewinde versehen, auf welches der Schneidring 5 aufgeschraubt ist. Dieser dichtet gegenüber dem Anschluss 7 ab und wirkt gleichzeitig als ein Flansch, an welchem sich die Überwurfmutter 4, welche mit dem Anschluss 7 verschraubbar ist, abstützt.

Hierzu ist die Überwurfmutter 4 mit einem ersten Hülsenabschnitt 9 (links in der Figur) mit einem Innengewinde zum Verbinden mit dem Anschluss 7 ausgestattet, an den sich ein weiterer Hülsenabschnitt 10 mit geringerem Außendurchmesser anschließt. Zwischen den beiden Hülsenabschnitten 9, 10 der Überwurfmutter 4 ist als ein nach innen vorspringender Flansch ein konischer Kragen 11 vorgesehen, mit dem sich die Überwurfmutter 4 an dem Schneidring 5 abstützt. Der weitere Hülsenabschnitt 10 umgreift dabei die Schraubhülse 3 und stützt sich auf dieser ab.

In der dargestellten Ausführungsform ist zwischen dem weiteren Hülsenabschnitt 10 der Überwurfmutter 4 und der Schraubhülse 3 ein Dichtungsring 12 angeordnet, der in einer Nut 13 in dem weiteren Hülsenabschnitt 10 aufgenommen ist. Der Dichtungsring 12 kann den von der Überwurfmutter umgebenen Raum vor Staub schützen. Zusätzlich ist eine Knickschutzfeder 14 vorgesehen, die den Schlauch 6 und die Schraubhülse 3 jeweils abschnittsweise umgreift.

Die einzelnen Verbindungsanordnungselemente werden nacheinander auf dem Schlauch 6 angebracht. Nach einem möglichen Verfahren zur Herstellung der Verbindungsanordnung 1 wird zuerst die Knickschutzfeder 14 vollständig auf den Schlauch 6 aufgeschoben, dann wird der Schlauchstutzen 2 in den Schlauch 6 eingeführt. Die Verbindung zwischen dem Schlauchstutzen 2 und dem Schlauch 6 wird dann durch die Schraubhülse 3 gesichert. Anschließend wird die Knickschutzfeder 14 derart verschoben, dass sie den Schlauchstutzen 2 bereichsweise umfasst.

Auf diese Teilanordnung wird die Überwurfmutter 4 aufgesteckt. Als letztes Element wird der Schneidring 5 auf den Schlauchstutzen 2 aufgeschraubt. In der vorliegenden Ausführungsform besteht der Schneidring 5 aus einem duktilen Metall und weist ein Innengewinde auf. Diese so aufgebaute Verbindungsanordnung kann über das Innengewinde des ersten Hülsenabschnittes 9 mit dem Außengewinde von Anschluss 7 verschraubt werden. Dabei greift der Kragen 11 der Überwurfmutter 4 an dem Schneidring 5 an. Da dieser fest mit dem Schlauchstutzen 2 verbunden ist, führt ein Verschrauben der Überwurfmutter 4 mit dem Anschluss 7 dazu, dass der Schlauchstutzen 2 in den Anschluss 7 verschoben wird. Somit wird eine lösbare Strömungsverbindung zwischen dem Anschluss und dem Schlauch erzielt, wobei Kräfte, die auf den Schlauch wirken, sowohl über den Schlauchstutzen 2, als auch über die Überwurfmutter 4 in den Anschluss 7 übertragen werden.

### Bezugszeichenliste

- 1: Verbindungsanordnung
- 2: Schlauchstutzen
- 3: Schraubhülse
- 4: Überwurfmutter
- 5: Schneidring
- 6: Schlauch
- 7: Anschluss
- 8: Kanal
- 9: erster Hülsenabschnitt
- 10: zweiter Hülsenabschnitt
- 11: Kragen
- 12: Dichtungsring
- 13: Ringnut
- 14: Knickschutzfeder

## Patentansprüche

1. Verbindungsanordnung zum Verbinden eines Schlauches (6) mit einem Anschluss (7), mit einem zumindest bereichsweise in den Schlauch (6) einführbaren, hohlen Schlauchstutzen (2) und einer Schraubhülse (3), die auf dem Schlauchstutzen (2) angeordnet ist und den Schlauch (6) bereichsweise umgreift, wobei der Schlauchstutzen (2) mit dem Anschluss (7) in Strömungsverbindung steht und durch eine Überwurfmutter (4) mit dem Anschluss (7) verbindbar ist, **dadurch gekennzeichnet, dass** die Überwurfmutter (4) die Schraubhülse (3) zumindest bereichsweise umgreift.

2. Verbindungsanordnung nach Anspruch 1, **dadurch gekennzeichnet, dass** die Überwurfmutter (4) einen ersten Hülsenabschnitt (9) mit einem Innengewinde zum Verbinden mit dem Anschluss (7) aufweist, welcher zum Abstützen auf dem Schlauchstutzen (2) oder einem damit verbundenen Element (5) einen nach innen gerichteten Kragen (11) aufweist, wobei die Überwurfmutter (4) einen weiteren Hülsenabschnitt (10) zum Umgreifen der Schraubhülse (3) aufweist.

3. Verbindungsanordnung nach Anspruch 2, **dadurch gekennzeichnet, dass** sich der Kragen (11) der Überwurfmutter (4) konisch nach innen verjüngt.

4. Verbindungsanordnung nach einem der vorhergehenden Ansprüche, **dadurch gekennzeichnet, dass** auf dem Schlauchstutzen (2) ein Schneidring (5) anbringbar ist, an dem sich die Überwurfmutter (4) abstützt.

5. Verbindungsanordnung nach den Ansprüchen 2 und 4, **dadurch gekennzeichnet, dass** der Kragen (11) der Überwurfmutter (4) teilweise auf dem Schlauchstutzen (2) aufsitzt und den Schneidring (5) umgreift.

6. Verbindungsanordnung nach einem der Ansprüche 2 bis 5, **dadurch gekennzeichnet, dass** die Überwurfmutter (4) an dem weiteren Hülsenabschnitt (10) eine Ringnut (13) aufweist, in der ein Dichtungsring (12) angeordnet ist.

7. Verbindungsanordnung nach einem der vorhergehenden Ansprüche, **dadurch gekennzeichnet, dass** die Schraubhülse (3) eine Ringnut aufweist, in der ein Dichtungsring angeordnet ist.

8. Verbindungsanordnung nach einem der vorhergehenden Ansprüche, **dadurch gekennzeichnet, dass** eine Knickschutzfeder (14) den Übergangsbereich von der Schraubhülse (3) zu dem Schlauch (6) umgibt.
